# EUROPÄISCHE PATENTSCHRIFT

(11) **EP 1 245 316 B1**
(45) Veröffentlichungstag und Bekanntmachung des Hinweises auf die Patenterteilung: **18.11.2009**
(21) Anmeldenummer: 02000836.3
(22) Anmeldetag: 15.01.2002
(51) Int. Cl.: B23B 51/10, B23B 31/107

(54) **Werkzeugaufnahme mit Zusatzschneidmitteln**
Holder for cutting tool with auxilliary cutting devices
Porte-outil avec organes de coupe supplémentaires

(30) Priorität: 27.03.2001 DE 10115016
(43) Veröffentlichungstag der Anmeldung: 02.10.2002
(73) Patentinhaber: EMUGE-Werk Richard Glimpel GmbH & Co.KG Fabrik für Präzisionswerkzeuge, 91207 Lauf (DE)
(72) Erfinder: Meyer, Ernst, 91207 Lauf (DE); Sperber, Klaus, 91287 Plech (DE)
(74) Vertreter: Schröer, Gernot H.

(56) Entgegenhaltungen:
- EP-A- 0 684 099
- DE-A- 19 528 824
- DE-U- 9 407 197
- DE-U- 29 616 165
- GB-A- 258 692
- JP-A- 51 066 576
- US-A- 2 826 104
- US-A- 4 353 670
- US-A- 5 265 988
- PATENT ABSTRACTS OF JAPAN vol. 013, no. 252 (M-836), 12. Juni 1989 (1989-06-12) -& JP 01 058409 A (TOUBU KURIINAA SERVICE:KK), 6. März 1989 (1989-03-06)
- PATENT ABSTRACTS OF JAPAN vol. 018, no. 289 (M-1614), 2. Juni 1994 (1994-06-02) -& JP 06 055320 A (WAKO GIKEN KOGYO KK), 1. März 1994 (1994-03-01)

## Beschreibung

Die Erfindung betrifft eine Werkzeugaufnahme mit Zusatzschneidmitteln, bei der ausgehend von einer vorderen Stirnseite eines Aufnahmeendbereiches eine Aufnahmebohrung für einen Schaft eines Schneiden aufweisenden Werkzeugs vorgesehen ist und bei der die Zusatzschneidmittel um die Aufnahmebohrung herum umfangsmäßig verteilt mit Zusatzschneiden versehene Schneidbereiche aufweisen, die einstückig mit einer Tragkörper-Einrichtung sind, die am Aufnahmeendbereich mittels Halteschrauben gehalten ist, die in Gewindelöcher des Aufnahmeendbereichs geschraubt sind und Durchbrüche der Tragkörper-Einrichtung queren, wobei die Tragkörper-Einrichtung ein einstückiges Tragkörper-Ringgebilde aufweist, das außerhalb des Aufnahmeendbereichs und parallel zu der Stirnseite angeordnet ist, wobei die Schneidbereiche quer zu einer durch das Tragkörper-Ringgebilde gegebenen Ebene von dem Tragkörper-Ringgebilde wegragen.

JP 51-66 576 bildet den oberbegriff für Anspruch 1 und offenbart ein Kombinationsschneidgerät, bei dem ein Planfräser entfernbar am äußeren Ende einer Spindel angebracht ist, wobei ein Bohrer entfernbar im Zentrum dieses Schaftes und der Spindel angebracht ist. Mit Hilfe dieses Kombinationswerkzeugs ist es möglich, Bohren und Oberflächenbearbeitung simultan auszuführen.

Bei einer bekannten (DE 195 28 824 A1) Werkzeugaufnahme dieser Art bildet die Tragkörper-Einrichtung für jeden Schneidbereich eine eigene Platte und jede der voneinander gesonderten Platten ist in einer Taschenausnehmung des Aufnahmeendbereichs eingesetzt und dort festgeschraubt. Jede Platte erstreckt sich parallel zur Mittelachse der Werkzeugaufnahme in die zugehörige Taschenausnehmung hinein. Jeder Schneidbereich setzt die zugehörige Platte in einer durch die Platte gegebenen Ebene fort. Die die Schneidbereiche einstückig bildenden Platten müssen in die Taschenausnehmungen genau eingefügt sein, damit einerseits die jeweils zugeordnete Zusatzschneide ihre Funktion genau erfüllt und andererseits die Zuordnung der umfangsmäßig verteilten Zusatzschneiden zueinander genau ist. Die Tragkörper-Einrichtung ist immer nur für die eine jeweils gefertigte Form verwendbar. Diese Problematik ist auch deshalb beachtlich, weil jede Platte der Tragkörper-Einrichtung mittels nur einer Halteschraube gehalten ist.

Es wird als unerwünscht aufwendig angesehen, die auf die Platten genau abgestimmten Taschenausnehmungen des Aufnahmeendbereichs herstellen zu müssen, wobei die Herstellung der Taschenausnehmungen im Zuge der Herstellung der Werkzeugaufnahme spanabhebend oder erodierend erfolgt. Eine Aufgabe der Erfindung ist es daher, eine Werkzeugaufnahme der eingangs genannten Art zu schaffen, bei der der die Werkzeugaufnahme selbst betreffende spanabhebende Herstellungsaufwand vermindert ist bzw. die gewünschte Genauigkeit der Zusatzschneiden mit verringertem Herstellungsaufwand erreicht ist. Gleichreitig sollen sich die Zusatzschneiden und die Schneiden in verbesserter weise relativ zweinander positionieren lassen. Die erfindungsgemäße Werkzeugaufnahme ist, diese Aufgabe lösend, **dadurch gekennzeichnet, dass** mittels der Gewindelöcher, Durchbrüche und Halteschrauben eine Winkeleinstell-Vetschtaubung gestaltet ist, bei der das Tragkörper-Ringgebilde relativ zum Aufnahmeendbereich bezüglich Drehung um die Aufnahmebohrung mit verschiedenen Winkeln einstellbar ist,

Bei der erfindungsgemäßen Werkzeugaufnahme sind wegen der Zusatzschneidmittel an dem Aufnahmeendbereich im wesentlichen nur die Gewindelöcher der Halteschrauben vorgesehen, was den die Werkzeugaufnahme betreffenden Herstellungsaufwand vereinfacht. Da die Zusatzschneiden an dem einstückigen Ringgebilde sitzen, ist die Zuordnung der umfangsmäßig verteilten Zusatzschneiden zueinander auf einfache Weise genau. Auch die Anordnung jeder Zusatzschneide ist auf vereinfachte Weise genau, da jede Zusatzschneide in ihrer Position durch mehr Schrauben als nur eine Schraube gesichert ist. Bei der erfindungsgemäßen Werkzeugaufnahme ist die winkelmäßige Einstellung der Zusatzschneiden zu dem Werkzeug in der Genauigkeit verbessert. Bei einem bearbeiteten Werkstück ist die Genauigkeit der Position einer mittels der Zusatzschneiden erzeugten Kontur zu der von dem Werkzeug selbst bearbeiteten WerkstückBohrung verbessert. Die Herstellung des einstückigen Tragkörper-Ringgebildes wird unabhängig von der Herstellung der Werkzeugaufnahme selbst durchgeführt. Das Ringgebilde vermeidet Unwucht der mit den Zusatzschneidmitteln versehenen Werkzeugaufnahme.

Die erfindungsgemäße Werkzeugaufnahme ist z. B. zum Aufnahmeendbereich hin mit einem Hülseneinsatz versehen, der die Aufnahmebohrung bildet. Besonders zweckmäßig und vorteilhaft ist es jedoch, wenn die Werkzeugaufnahme zu dem Aufnahmeendbereich hin in Monoblock-Bauweise gestaltet ist. Es ist nämlich gerade bei einer in Monoblock-Bauweise gestalteten Werkzeugaufnahme aufwendig, Taschenausnehmungen spanabhebend herzustellen.

Die erfindungsgemäße Werkzeugaufnahme ist unter Berücksichtigung der Aufnahmebohrung zum Halten des Werkzeugs ausgelegt, lässt sich aber auch ohne das Werkzeug nur mit den Zusatzschneidmitteln einsetzen. Jedoch ist die erfindungsgemäße Werkzeugaufnahme primär auch im Hinblick auf die Zuordnung der Zusatzschneidmittel zu dem Werkzeug gestaltet. Die in dem Aufnahmeendbereich vorgesehenen Gewindelöcher beeinträchtigen dessen Festigkeit nicht und zwar auch nicht, wenn sie in einer vergrößerten Vielzahl vorgesehen sind, wie es weiter unten geschildert wird. Die umfangsmäßig verteilten Zusatzschneiden sind z. B. auf einem Durchmesser quer zur Mittelachse einander gegenüber angeordnet. Es sind z.B. rechtsschneidende, links schneidende oder rechtsschneidende sowie linksschneidende Zusatzschneiden vorgesehen.

Besonders zweckmäßig und vorteilhaft ist es auch, wenn zumindest einer der Schneidbereiche zwei funktionsmäßig verschiedene Zusatzschneiden, die zueinandergewinkelt oder versetzt sind, bildet. Diese an sich bekannte Gestaltung eines Schneidbereiches ist in Verbindung mit der Erfindung von Vorteil, weil die Genauigkeit der Positionierung der Zusatzschneiden verbessert ist.

Es ist denkbar, am Ringgebilde ein Zylinderstück fest vorzusehen, das außen auf den Aufnahmeendbereich geschoben wird und mit radial verlaufenden Halteschrauben am Aufnahmeendbereich festgelegt wird. Besonders zweckmäßig und vorteilhaft ist es jedoch, wenn die Halteschrauben-Durchbrüche am Tragkörper-Ringgebilde vorgesehen sind und die Halteschrauben in axialer Richtung zur Stirnseite des Aufnahmeendbereichs verlaufen, wobei die Gewindelöcher zu der Stirnseite hin gerichtet sind. Die axial angeordneten Halteschrauben weisen dem Ringgebilde selbst die Funktion zu, den Halteschrauben Widerlager zu sein. Die Halteschrauben drängen das Ringgebilde in Richtung zur Stirnseite.

Eine besonders zweckmäßige und vorteilhafte Ausführungsform der Erfindung liegt vor, wenn das Tragkörper-Ringgebilde von der Aufnahmeendbereich-Stirnseite Abstand aufweist, indem ein Distanzhülsstück, das eine axiale Höhe aufweist, einerseits am Aufnahmeendbereich und andererseits am Ringgebilde abgestützt ist. Bei dieser Ausführungsform liegt das Ringgebilde nicht unmittelbar an der Stirnseite an. Das Distanzhülsstück bildet z. B. auch das vorher angegebene anzuschraubende Zylinderstück. Das Distanzhülsstück dient dazu, die axiale Stellung der Zusatzschneiden an die axiale Stellung des Werkzeugs anzupassen. Es werden also in der Regel der Werkzeugaufnahme verschiedene axiale Höhen des Distanzhülsstücks zugeordnet, um z. B. ein Tragkörper-Ringgebilde mit bestimmten Zusatzschneiden in Kombination mit mehreren verschiedenen Werkzeugen verwenden zu können. Axial meint hier soviel wie in Richtung der Mittelachse der Aufnahmebohrung. Das Distanzhülsstück verbessert auch die Zentrierung des Ringgebildes relativ zum Aufnahmeendbereich.

Das Distanzhülsstück ist z. B. mit dem Ringgebilde einstückig und wird durch Abschleifen in der axialen Höhe verändert. Besonders zweckmäßig und vorteilhaft ist es jedoch, wenn bei axialem Verlauf der Halteschrauben das Distanzhülsstück ein von dem Tragkörper-Ringgebilde gesondertes Teil ist. Es wird also je nach gewünschter axialer Stellung der Zusatzschneiden ein in der axialen Höhe anderes Distanzhülsstück eingesetzt.

Besonders zweckmäßig und vorteilhaft ist es dabei, wenn die Halteschrauben eine vorgegebene, gleichbleibende Länge aufweisen und mehreren Distanzhülsstücken verschiedener axialer Höhe zugeordnet sind. Die Gewindelöcher sind dabei ausreichend tief, um die Halteschrauben auch bei einem seht niedrigen Distanzhülsstück voll einschrauben zu können. Es muss nicht für jede axiale Höhe des Distanzhülsstücks ein eigener Satz von Halteschrauben vorgesehen sein.

Mittels der Gewindelöcher, Durchbrüche und Halteschrauben ist eine Winkeleinstell-Verschraubung gestaltet, bei der das Tragkörper-Ringgebilde relativ zum Aufnahmeendbereich bezüglich Drehung um die Aufnahmebohrung mit verschiedenen Winkeln einstellbar ist. Es lässt sich also das Ringgebilde bei der Montage in eine bestimmte Position zu dem einzusetzenden Werkzeug drehen und in dieser Position festschrauben. Die Zusatzschneiden und die Schneiden des Werkzeugs lassen sich in verbesserter Weise relativ zueinander positionieren. Es kann die Stellung der Zusatzschneiden an die Stellung des Werkzeugs angepasst werden, ohne an der Stellung des Werkzeugs etwas ändern zu müssen.

Es ist denkbar, die Durchbrüche des Tragkörper-Ringgebildes jeweils als in Umfangsrichtung verlaufende Langlöcher zu gestalten, um das Ringgebilde in verschiedene Winkelstellungen rund um die Aufnahmebohrung zu drehen. Besonders zweckmäßig und vorteilhaft ist es jedoch, wenn die Durchbrüche des Tragkörper-Ringgebildes als Rundlöcher gestaltet sind, entweder die Rundlöcher oder die Gewindelöcher je von einer Halteschraube besetzt sind und die Rundlöcher sowie die Gewindelöcher in der Anzahl verschieden sind. Durch die Rundlöcher ist die Halterung bzw. Festlegung des Tragkörper-Ringgebildes verbessert, wobei die Winkeleinstell-Verschraubung durch die überzähligen Gewindelöcher oder Rundlöcher gegeben ist.

Besonders zweckmäßig und vorteilhaft ist es dabei, wenn am Aufnahmeendbereich eine in sich geschlossene Ringkette von Gewindelöchern vorgesehen ist, deren Anzahl ein, z.B. ganzzahliges, Vielfaches der mit Halteschrauben versetzten Rundlöcher des Tragkörper-Ringgebildes ist. Dies ermöglicht eine Winkeleinstellung in relativ kleinen Winkelschritten von z. B. 30 °.

Bei einer besonders zweckmäßigen und vorteilhaften Ausführungsform der Erfindung ist vorgesehen, dass mindestens einer der Schneidbereiche an einer der Aufnahmebohrung zugewendeten Seite und mit Abstand von der Aufnahmebohrung eine sich in Längsrichtung der Aufnahmebohrung erstreckende Zusatzschneide aufweist. Mit dieser längs verlaufenden Zusatzschneide lässt sich eine Außenkontur eines Werkstückvorsprungs bearbeiten, in welchem mittels des Werkzeugs ein Loch erzeugt ist.

In der Zeichnung ist eine bevorzugte Ausführungsform der Erfindung dargestellt und zeigt
- Fig. 1: eine Seitenansicht einer Werkzeugaufnahme mit Zusatzschneidmitteln,
- Fig. 2: eine Vorderansicht der Werkzeugaufnahme gemäß Fig. 1, in einem gegenüber Fig. 1 vergrößerten Maßstab,
- Fig. 3: eine Ansicht in einer Richtung wie in Fig. 2, jedoch unter Weglassung eines Tragkörper-Ringgebildes,
- Fig. 4: einen Schnitt der Zusatzschneidmittel gemäß Fig. 1, in einem gegenüber Fig. 1 vergrößerten Maßstab und gegenüber Fig. 1 um 180° in der Zeichenebene gedreht, und
- Fig. 5 sowie 6: jeweils eine Seitenansicht eines Tragkörper-Ringgebildes für die Werkzeugaufnahme gemäß Fig. 1.

Die Werkzeugaufnahme gemäß Zeichnung bildet einen hinteren Koppelbereich 1, einen mittleren Manipulierbereich 2 und einen vorderen Aufnahmebereich 3, der wiederum einen vorderen Aufnahmeendbereich 4 bildet. Am Aufnahmebereich 3 sind Klemmschrauben 5 vorgesehen, um einen eingesteckten Schaft 6 eines Werkzeugs 7 festzulegen, das Schneiden 8 bildet. Am vorderen Aufnahmeendbereich 4 sind Zusatzschneidmittel 9 vorgesehen F die ein Tragkörper-Ringgebilde 10 umfassen, das mit zwei Schneidbereichen 11 versehen ist und über ein Distanzhülsstück 12 gegen den Aufnahmeendbereich 4 abgestützt ist.

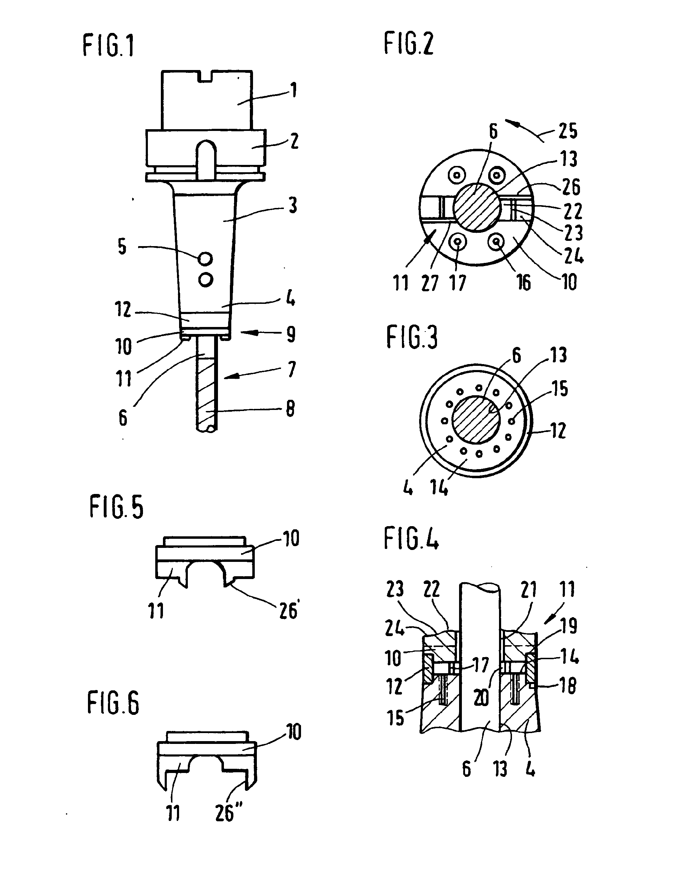

Gemäß Fig. 2 und 3 ist der Schaft 6 des Werkzeuges 7 in eine mittige Aufnahmebohrung 13 des Aufnahmebereichs 3 gesteckt, wobei die Aufnahmebohrung an einer im wesentlichen planen Stirnseite 14 des vorderen Aufnahmeendbereichs 4 mündet und die Stirnseite 14 rechtwinkelig zur axialen Längserstreckung der Aufnahmebohrung angeordnet ist. Ausgehend von der Stirnseite 14 sind in dem Aufnahmeendstück 4 Gewindelöcher 15 vorgesehen, die in einer Vielzahl in Form einer Ringkette rund um die Aufnahmebohrung 13 angeordnet sind. Den Gewindelöchern 15 ist eine geringe Anzahl von angesenkten Rundlöchern 16 im Tragkörper-Ringgebilde 10 zugeordnet und die Rundlöcher sind zwischen den Schneidbereichen 11 angeordnet. Durch jedes angesenkte Rundloch 16 ist eine Halteschraube 17 gesteckt, deren Kopf in der Ansenkung eingelassen ist und die in eine der Gewindelöcher 15 geschraubt wird. Es sind für vier Halteschrauben 17 vier Rundlöcher 16 und zwölf Gewindelöcher 15 vorgesehen.

Fig. 4 verdeutlicht den Schaft 6 in der Aufnahmebohrung 13 des vorderen Aufnahmeendbereichs 4. Dieser ist zur Stirnseite 14 hin am äußeren Rand mit einer rundum verlaufenden Ansenkung 18 versehen, in welche das Distanzhülsstück 12 eingreift und gegen deren radiale Stufe das Distanzhülsstück axial abgestützt ist. Das Tragkörper-Ringgebilde 10 ist an seiner dem Distanzhülsstück 12 zugewendeten Seite am äußeren Rand mit einer rundum verlaufenden Ansenkung 19 versehen, in welche das Distanzhülsstück 12 eingreift und gegen deren radiale Stufe das Distanhülsstück 12 axial abgestützt ist. Gemäß Fig. 4 weist das Tragkörper-Ringgebilde 10 gegenüber der Stirnseite 14 einen Abstand 20 auf und hat das Ringgebilde 10 gegenüber dem Schaft 6 Spiel 21.

Jeder der beiden Schneidbereiche 11 bildet radial von innen nach außen eine Freifläche 22, eine Fassfläche 23 und eine Planfläche 24. Die Fassfläche 23 und die Planfläche 24 bilden an dem in Drehrichtung 25 vorne liegenden Ende Zusatzschneiden 26. In Drehrichtung vor dem Schneidbereich 11 ist eine spanführende Kehle 27 vorgesehen. Fig. 5 und 6 zeigen jeweils ein Tragkörper-Ringgebilde 10 mit Schneidbereichen 11, bei denen die Zusatzschneiden anders verlaufen als die Zusatzschneiden 26 gemäß Fig. 2. Es sind gemäß Fig. 5 Zusatzschneiden 26' vorgesehen, die nahe dem Mittenbereich des Ringgebildes als schräge Fasschneiden gestaltet sind. Es sind gemäß Fig. 6 Zusatzschneiden 26" vorgesehen, die axial verlaufen und radial nach innen gewendet sind, um eine Außenkontur eines Werkstückvorsprungs zu bearbeiten.

## Patentansprüche

1. Werkzeugaufnahme mit Zusatzschneidmitteln,
bei der ausgehend von einer vorderen Stirnseite eines Aufnahmeendbereiches eine Aufnahmebohrung für einen Schaft eines Schneiden aufweisenden Werkzeugs vorgesehen ist und
bei der die Zusatzschneidmittel um die Aufnahmebohrung herum umfangsmäßig verteilt mit Zusatzscheiden versehene Schneidbereiche aufweisen, die einstückig mit einer Tragkörper-Einrichtung sind, die am Aufnahmeendbereich mittels Halteschrauben gehalten ist, die in Gewindelöcher des Aufnahmeendbereichs geschraubt sind und Durchbrüche der Tragkörper-Einrichtung queren,
wobei die Tragkörper-Einrichtung ein einstückiges Tragkörper- Ringgebilde (10) aufweist, das außerhalb des Aufnahmeendbereichs (4) und parallel zu der Stirnseite (14) angeordnet ist, wobei die Schneidbereiche quer zu einer durch das Tragkörper-Ringgebilde (10) gegebenen Ebene von dem Tragkörper-Ringgebilde wegragen,
**dadurch gekennzeichnet, dass**
mittels der Gewindelöcher (15), Durchbrüche (16) und Halteschrauben (17) eine Winkeleinstell-Verschraubung gestaltet ist, bei der das Tragkörper-Ringgebilde (10) relativ zum Aufnahmeendbereich (4) bezüglich Drehung um die Aufnahmebohrung (13) mit verschiedenen Winkeln einstellbar ist.

2. Werkzeugaufnahme nach Anspruch 1,
**dadurch gekennzeichnet,**
**dass** sie zu dem Aufnahmeendbereich (4) hin in Monoblock-Bauweise gestaltet ist.

3. Werkzeugaufnahme nach Anspruch 1 oder 2,
**dadurch gekennzeichnet,**
**dass** zumindest einer der Schneidbereiche (11) zwei funktionsmäßig verschiedene Zusatzschneiden (26), die zueinandergewinkelt oder versetzt sind, bildet.

4. Werkzeugaufnahme nach Anspruch 1, 2 oder 3,
**dadurch gekennzeichnet,**
**dass** die Halteschrauben-Durchbrüche (16) am Tragkörper-Ringgebilde (10) vorgesehen sind und die Halteschrauben (17) in axialer Richtung zur Stirnseite (14) des Aufnahmeendbereichs (4) verlaufen, wobei die Gewindelöcher (15) zu der Stirnseite (14) hin gerichtet sind.

5. Werkzeugaufnahme nach einem der vorhergehenden Ansprüche, **dadurch gekennzeichnet,**
**dass** das Tragkörper-Ringgebilde (10) von der Aufnahmeendbereich-Stirnseite (14) Abstand (20) aufweist, indem ein Distanzhülsstück (12), das eine axiale Höhe aufweist, einerseits am Aufnahmeendbereich (4) und andererseits am Ringgebilde (10) abgestützt ist.

6. Werkzeugaufnahme nach Anspruch 5,
**dadurch gekennzeichnet,**
**dass** bei axialem Verlauf der Halteschrauben (17) das Distanzhülsstück (12) ein von dem Tragkörper-Ringgebilde (10) gesondertes Teil ist.

7. Werkzeugaufnahme nach Anspruch 6,
**dadurch gekennzeichnet,**
**dass** die Halteschrauben (17) eine vorgegebene, gleichbleibende Länge aufweisen und mehreren Distanzhülsstücken (12) verschiedener axialer Höhe zugeordnet sind.

8. Werkzeugaufnahme nach Anspruch 1,
**dadurch gekennzeichnet,**
**dass** die Durchbrüche des Tragkörper-Ringgebilde (10) als Rundlöcher (16) gestaltet sind, entweder die Rundlöcher oder die Gewindelöcher je von einer Halteschraube (17) besetzt sind und die Rundlöcher sowie die Gewindelöcher in der Anzahl verschieden sind.

9. Werkzeugaufnahme nach Anspruch 8,
**dadurch gekennzeichnet,**
**dass** am Aufnahmeendbereich (4) eine in sich geschlossene Ringkette von Gewindelöchern (15) vorgesehen ist, deren Anzahl ein, z. B. ganzzahliges, Vielfaches der mit Halteschrauben (17) besetzten Rundlöcher (16) des Tragkörper-Ringgebildes (10) ist.

10. Werkzeugaufnahme nach einem der vorhergehenden Ansprüche, **dadurch gekennzeichnet,**
**dass** mindestens einer der Schneidbereiche (11) an einer der Aufnahmebohrung (13) zugewendeten Seite und mit Abstand von der Aufnahmebohrung eines sich in Längsrichtung der Aufnahmebohrung erstreckende Zusatzschneide (26") aufweist.

## Claims

1. Holder for cutting tool with auxiliary cutting devices, in which, proceeding from a front face of a receiving end region, a mounting hole is provided for a shaft of a tool having a cutter and in which the auxiliary cutting devices, which are distributed circumferentially around the mounting hole, have cutting regions provided with auxiliary cutters, said regions being integral to a carrier body device, which is held on the receiving end region by means of retaining screws that are screwed into threaded holes of said receiving end region and traverse apertures of the carrier body device, whereby the carrier body device has a one-piece carrier body ring structure (10), which is disposed outside the receiving end region (4) and parallel to the front face (14), whereby the cutting regions protrude away from the carrier body ring structure at right angles to a plane defined by said carrier body ring structure (10),
**characterised in that,**
by means of the threaded holes (15), apertures (16) and retaining screws (17) an angle-adjusting screwed joint is created, in which the carrier body ring structure (10) is adjustable at various angles relative to the receiving end region (4) in respect of rotation about the locating hole (13).

2. Holder for cutting tool according to claim 1,
**characterised in that,**
it is designed in a monobloc construction towards the receiving end region (4).

3. Holder for cutting tool according to claim 1 or 2,
**characterised in that,**
at least one of the cutting regions (11) forms two functionally different auxiliary cutters (26), which are angled or offset against one another.

4. Holder for cutting tool according to claim 1, 2 or 3,
**characterised in that,**
the apertures of the retaining screws (16) are provided on the carrier body ring structure (10) and the retaining screws (17) run in a direction axial to the front face (14) of the receiving end region (4), whereby the threaded holes (15) face towards the front face (14).

5. Holder for cutting tool according to one of the preceding claims,
**characterised in that,**
the carrier body ring structure (10) has a gap (20) between the receiving end region's front face (14), **in that** a spacer sleeve (12), having an axial height, is supported on the receiving end region (4) on one hand and on the ring structure (10) on the other.

6. Holder for cutting tool according to claim 5,
**characterised in that,**
with the retaining screws (17) running axially, the spacer sleeve (12) is a part separate from the carrier body ring structure (10).

7. Holder for cutting tool according to claim 6,
**characterised in that,**
the retaining screws (17) have a predetermined, constant length and are assigned to a plurality of spacer sleeves (12) of differing axial height.

8. Holder for cutting tool according to claim 1,
**characterised in that,**
the apertures of the carrier body ring structure (10) are designed as round holes (16), either the round holes or the threaded holes are each occupied by a retaining screw (17) and the round holes and the threaded holes differ in number.

9. Holder for cutting tool according to claim 8,
**characterised in that,**
on the receiving end region (4) is provided a self-contained ring chain of threaded holes (15), the number of which is, for example, a whole number multiple of the round holes (15) occupied by retaining screws (17) of the carrier body ring structure (10).

10. Holder for cutting tool according to one of the preceding claims, **characterised in that** at least one of the cutting regions (11) on a side facing the locating hole (13) and at a distance from the locating hole has an auxiliary cutter (26") extending in the longitudinal direction of the locating hole.

## Revendications

1. Porte-outil avec des organes de coupe supplémentaires, dans lequel, en partant d'un côté frontal avant d'une zone d'extrémité de réception est prévu un perçage de réception pour un fût d'un outil présentant des tranchants et
dans lequel les moyens de coupe supplémentaires, répartis sur le pourtour du perçage de réception, présentent des zones de coupe munies de tranchants additionnels, qui sont réalisés en une pièce avec une installation de corps de support qui est retenue à la zone d'extrémité de réception au moyen de vis de retenue qui sont vissés dans des trous taraudés de la zone d'extrémité de réception et traversent des ruptures de l'installation de corps de support,
où l'installation de corps de support présente une structure annulaire de corps de support en une pièce (10) qui est disposée à l'extérieur de la zone d'extrémité de réception (4) et parallèlement au côté frontal (14), où les zones de coupe font saillie transversalement à un plan formé par la structure annulaire de corps de support (10) de la structure annulaire de corps de support,
**caractérisé en ce que**
au moyen des trous taraudés (15), ruptures (16) et vis de retenue (17), un vissage à réglage d'angle est formé, dans lequel la structure annulaire de corps de support (10) est réglable relativement à la zone d'extrémité de réception (4) relativement à la rotation autour du perçage de réception (13) selon des angles différents.

2. Porte-outil selon la revendication 1,
**caractérisé en ce que**
celui-ci est configuré vers la zone d'extrémité de réception (4) en une construction monobloc.

3. Porte-outil selon la revendication 1 ou 2,
**caractérisé en ce qu'**
au moins une des zones de coupe (11) forme deux tranchants additionnels fonctionnellement différents (26) qui sont disposés selon un angle ou décalés l'un relativement à l'autre.

4. Porte-outil selon la revendication 1, 2 ou 3,
**caractérisé en ce que**
les perçages de vis de retenue (16) sont prévus à la structure annulaire de corps de support (10) et que les vis de retenue (17) s'étendent dans la direction axiale vers le côté frontal (14) de la zone d'extrémité de réception (4), les trous taraudés (15) étant orientés vers le côté frontal (14).

5. Porte-outil selon l'une des revendications précédentes, **caractérisé en ce que**
la structure annulaire de corps de support (10) présente un écart (20) par rapport au côté frontal de la zone d'extrémité de réception, **en ce qu'**une pièce de manchon d'écartement (12), qui présente une hauteur axiale, s'appuie d'une part à la zone d'extrémité de réception (4) et d'autre part à la structure annulaire (10).

6. Porte-outil selon la revendication 5,
**caractérisé en ce que**
lors d'une extension axiale des vis de retenue (17), la pièce de manchon d'écartement (12) est une pièce séparée de la structure annulaire de corps de support (10).

7. Porte-outil selon la revendication 6,
**caractérisé en ce que**
les vis de retenue (17) présentent une longueur constante prédéterminée et sont associées à plusieurs pièces de manchon d'écartement (12) d'une hauteur axiale différente.

8. Porte-outil selon la revendication 1,
**caractérisé en ce que**
les perçages de la structure annulaire de corps de support (10) sont réalisés comme trous ronds (16), que soit les trous ronds soit les trous taraudés sont garnis chacun d'une vis de retenue (17) et que le nombre, à la fois des trous ronds et des trous taraudés, est différent.

9. Porte-outil selon la revendication 8,
**caractérisé en ce qu'**
il est prévu à la zone d'extrémité de réception (4) une chaîne annulaire fermée de trous taraudés (15) dont le nombre est par exemple un multiple entier des trous ronds (16) garnis de vis de retenue (17) de la structure annulaire de corps de support (10).

10. Porte-outil selon l'une des revendications précédentes,
**caractérisé en ce qu'**
au moins une des zones de coupe (11) présente à un côté orienté vers le perçage de réception (13) et à distance du perçage de réception un tranchant additionnel (26") s'étendant dans la direction longitudinale du perçage de réception.
